(19) Europäisches Patentamt
European Patent Office
Office européen des brevets

(11) **EP 4 151 760 A1**

(12) **EUROPEAN PATENT APPLICATION**
published in accordance with Art. 153(4) EPC

(43) Date of publication:
**22.03.2023 Bulletin 2023/12**

(21) Application number: **21802952.8**

(22) Date of filing: **17.05.2021**

(51) International Patent Classification (IPC):
*C21D 9/32* (2006.01)  *C22C 38/00* (2006.01)
*C21D 1/06* (2006.01)  *C23C 8/26* (2006.01)
*C23C 8/32* (2006.01)

(52) Cooperative Patent Classification (CPC):
**C21D 1/06; C21D 9/32; C22C 38/00; C22C 38/60;
C23C 8/26; C23C 8/32;** Y02P 10/25

(86) International application number:
**PCT/JP2021/018687**

(87) International publication number:
**WO 2021/230384 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.05.2020 JP 2020086319
15.05.2020 JP 2020086318**

(71) Applicant: **JFE Steel Corporation
Tokyo 100-0011 (JP)**

(72) Inventors:
• **IHARA, Naoya**
**Tokyo 100-0011 (JP)**
• **IWAMOTO, Takashi**
**Tokyo 100-0011 (JP)**
• **NISHIMURA, Kimihiro**
**Tokyo 100-0011 (JP)**

(74) Representative: **Grünecker Patent- und
Rechtsanwälte
PartG mbB
Leopoldstraße 4
80802 München (DE)**

(54) **STEEL COMPONENT**

(57)    Provided is a steel component with excellent surface fatigue strength. The steel component has a nitride compound layer with a thickness of 5.0 $\mu$m to 30.0 $\mu$m and a hardened layer in an order from a component surface to a component inside, where a thickness of a porous layer on an outermost surface of the nitride compound layer is 3.0 $\mu$m or less and 40.0 % or less of a thickness of the nitride compound layer, and the hardened layer has a hardness of HV600 or more at a position of 50 $\mu$m inward from the component surface, a hardness of HV400 or more at a position from the component surface to the component inside of 400 $\mu$m, and a hardness of HV250 or more at a position from the component surface to the component inside of 600 $\mu$m.

EP 4 151 760 A1

*FIG. 2*

```
                    ┌──────────────┐  ┐
                    │   Melting    │  │
                    └──────────────┘  │
                           │          │
                    ┌──────────────┐  │
                    │   Rolling    │  ├ S1
                    └──────────────┘  │
                           │          │
                    ┌──────────────┐  │
                    │   Shipping   │  │
                    └──────────────┘  ┘
                           │
                    ┌──────────────┐  ┐
                    │ Transporting │  ├ S2
                    └──────────────┘  ┘
                           │
                    ┌──────────────┐  ┐
                    │  Receiving   │  │
                    └──────────────┘  │
                           │          │
                    ┌──────────────┐  │
                    │   Cutting    │  │
                    └──────────────┘  │
                       ╱       ╲      │
          ┌──────────────┐  ┌──────────────┐
          │ Hot forging  │  │ Cold forging │├ S3
          └──────────────┘  └──────────────┘
                       ╲       ╱      │
                    ┌──────────────┐  │
                    │ Cutting work │  │
                    └──────────────┘  │
                           │          │
                    ┌──────────────┐  │
                    │Nitrocarburizing│ │
                    │  treatment   │  │
                    └──────────────┘  │
                           │          │
                    ┌──────────────┐  │
                    │   Product    │  │
                    └──────────────┘  ┘
```

**Description**

TECHNICAL FIELD

This disclosure relates to a steel component, especially to a steel component having excellent fatigue resistance and having a compound layer that has been subjected to nitrocarburizing treatment on a surface layer.

BACKGROUND

Machine structural components such as automobile gears are required to have excellent fatigue resistance, and therefore such components are usually subjected to surface hardening treatment. Examples of well-known surface hardening treatment include carburizing treatment, induction quench hardening, and nitriding treatment.

Among these, in carburizing treatment, C is immersed and diffused in high-temperature austenite region and a deep hardening depth is obtained. Therefore, carburizing treatment is effective in improving fatigue resistance. However, since carburizing treatment causes heat treatment distortion, it is difficult to apply such treatment to components that require severe dimensional accuracy from the perspective of noise or the like.

Further, in induction quench hardening, quenching is performed on a surface layer by high frequency induction heating, which causes heat treatment distortion and leads to problems in dimensional accuracy as in the case with carburizing treatment.

On the other hand, in nitriding treatment, surface hardness is increased by immersing and diffusing nitrogen in a relatively low temperature range equal to or lower than the $Ac_1$ transformation temperature, which causes little heat treatment distortion such as mentioned above. However, there are problems that the treatment requires a long time of 50 hours to 100 hours, and it is necessary to remove brittle compound layers on the surface layer after the treatment.

Therefore, nitrocarburizing treatment in which treatment is performed at a treatment temperature almost equal to nitriding treatment temperature and in a shorter treatment time has been developed and has been widely used for machine structural components and the like in recent years. In the nitrocarburizing treatment, N and C are simultaneously immersed in a temperature range of 500 °C to 600 °C to form a nitride layer with solute C dissolved therein in the outermost surface, and at the same time, N is diffused into the steel substrate to form a hardened layer to harden the surface. The treatment time of the nitrocarburizing treatment can be reduced to half or less of that of the conventional nitriding treatment.

However, whereas the carburizing treatment enables to increase the core hardness by quench hardening, nitrocarburizing treatment does not increase the core hardness because it is performed at a temperature equal to or lower than the transformation temperature of steel. Therefore, a nitrocarburized material is inferior in fatigue resistance to a carburized material.

Quenching and tempering are usually performed before nitrocarburizing treatment to increase the core hardness, so that the fatigue resistance of a nitrocarburized material can be improved. However, this approach cannot provide sufficient fatigue resistance. Further, this approach increases manufacturing costs and deteriorates mechanical workability.

To solve these problems, JP H05-59488 A (PTL 1) proposes a steel for nitrocarburizing which can exhibit good bending fatigue resistance after subjection to nitrocarburizing treatment by adding Ni, Cu, Al, Cr, Ti, and the like to the steel. Regarding this steel, by performing nitrocarburizing treatment, the core part is age hardened by Ni-Al based or Ni-Ti based intermetallic compounds or Cu compounds, while in the surface layer, for example, Cr, Al, Ti nitrides or carbides are precipitated and hardened in the nitride layer, to improve the bending fatigue resistance.

JP 2002-69572 A (PTL 2) proposes a steel for nitrocarburizing which provides excellent bending fatigue resistance after subjection to nitrocarburizing treatment by subjecting a steel containing 0.5 % to 2 % of Cu to extend forging by hot forging, and then air cooling the steel so as to have a microstructure mainly composed of ferrite with solute Cu dissolved therein, and then causing precipitation hardening of Cu during nitrocarburizing treatment at 580 °C for 120 minutes and precipitation hardening of carbonitrides of Ti, V and Nb.

JP 2010-163671 A (PTL 3) proposes a steel for nitrocarburizing obtained by dispersing Ti-Mo carbides, and further dispersing carbides containing one or more of Nb, V, and W.

JP 6388075 B (PTL 4) proposes to improve the surface fatigue strength by reducing the void ratio of a surface compound layer.

CITATION LIST

Patent Literature

PTL 1: JP H05-59488 A
PTL 2: JP 2002-69572 A
PTL 3: JP 2010-163671 A
PTL 4: JP 6388075 B

SUMMARY

(Technical Problem)

However, although the nitrocarburized steels described in the PTLs 1 to 3 have excellent bending fatigue resistance, they give no consideration to surface fatigue resistance. The technology described in the PTL 4 improves the surface fatigue resistance by improving the compound layer of the outermost surface, but it gives no consideration to the depth of a hardened layer.

It could thus be helpful to provide a steel component with excellent surface fatigue resistance by appropriately adjusting a compound layer and the depth of a hardened layer.

(Solution to Problem)

To solve the problems, we have diligently studied the optimum compound layer and the optimum depth of a hardened layer. As a result, we found that it is effective to improve the surface fatigue resistance by achieving both an increase in the depth of a hardened layer and suppression of embrittlement of a compound layer.

1. A steel component, comprising a nitride compound layer with a thickness of 5.0 $\mu$m to 30.0 $\mu$m and a hardened layer in an order from a component surface to a component inside, wherein

a thickness of a porous layer on an outermost surface of the nitride compound layer is 3.0 $\mu$m or less and 40.0 % or less of a thickness of the nitride compound layer, and
the hardened layer has a hardness of HV600 or more at a position of 50 $\mu$m inward from the component surface, a hardness of HV400 or more at a position from the component surface to the component inside of 400 $\mu$m, and a hardness of HV250 or more at a position from the component surface to the component inside of 600 $\mu$m.

2. The steel component according to 1., wherein the steel component is a toothed component and has the nitride compound layer and the hardened layer at least in a tooth portion.

(Advantageous Effect)

According to the present disclosure, it is possible to provide a steel component with excellent surface fatigue strength. Therefore, the steel component of the present disclosure is extremely useful when applied to mechanical structural components for automobiles and the like.

BRIEF DESCRIPTION OF THE DRAWINGS

In the accompanying drawings:

FIG. 1 illustrates a roller pitching test piece; and
FIG. 2 illustrates typical manufacturing processes of a nitrocarburized component.

DETAILED DESCRIPTION

The following describes the present disclosure in detail.

First, the reasons for limiting the thickness of the nitride compound layer and the porous layer and the hardness distribution of the hardened layer of the steel component of the present disclosure to the above-described ranges are explained.

Thickness of nitride compound layer containing nitride compound: 5.0 $\mu$m to 30.0 $\mu$m

The nitride compound layer (hereafter may be referred to as "compound layer") has an extremely high hardness and contributes to improving the surface fatigue resistance of the steel component. A too thin nitride compound layer leads to early exposure of the steel substrate of the steel component due to wearing, which decreases the fatigue strength improvement effect. Therefore, the thickness of the nitride compound layer is set to 5.0 $\mu$m or more. It is preferably 6.0

μm or more and more preferably 10.0 μm or more.

On the other hand, a too thick nitride compound layer renders it difficult to suppress the formation of the porous layer described below. Therefore, the thickness of the nitride compound layer is set to 30.0 μm or less. It is preferably 25.0 μm or less.

Thickness of porous layer: 40.0 % or less of the thickness of nitride compound layer and 3.0 μm or less

The porous layer is an aggregate of minute pores inevitably formed in the outermost surface of the compound layer by nitrocarburizing. Since the presence of the porous layer adversely affects the fatigue strength, it is desirable to make it as thin as possible. When the thickness of the porous layer exceeds 3.0 μm or exceeds 40.0 % of the thickness of the nitride compound layer, the expected improvement in fatigue resistance due to the formation of the nitride compound layer cannot be sufficiently achieved. Therefore, the thickness of the porous layer needs to be 40.0 % or less of the thickness of the nitride compound layer and 3.0 μm or less. It may be even 0.

The thickness of the porous layer in the present disclosure is measured with the method described in the EXAMPLES section below.

Depth of hardened layer: a hardness of HV600 or more at a position of 50 μm inward from the component surface, a hardness of HV400 or more at a position from the component surface to the component inside of 400 μm, and a hardness of HV250 or more at a position from the component surface to the component inside of 600 μm

It is known that there is a correlation between material hardness and fatigue strength (see, for example, "MatNavi, JIS Steel for Machine Structural Use, Mechanical Properties and Fatigue Properties of Chromium Steel and Chromium Molybdenum Steel"). In other words, a desired fatigue strength can be obtained if there is sufficient hardness, regardless of the composition.

When a steel component has a slipping contact, two types of forces are applied to the steel component. One is the shear stress due to the tangential forces, which is maximized at the surface. The other is the shear stress due to the perpendicular reaction force, which is maximized at deeper positions. The hardness distribution is set to exhibit excellent fatigue resistance against these two types of forces.

In particular, the shear stress due to the perpendicular reaction force tends to be a problem for nitrocarburized steel with a thin hardened layer. The shear stress distribution due to the perpendicular reaction force when the teeth, cylinders, and spheres of a gear are brought into contact with each other can be expressed by the following equation. As used herein, z is the depth, P(z) is the shear stress at depth z, Pmax is the maximum contact stress, and b is the osculating ellipse minor axis length.

$$P(z) = P_{max} \times \left( \frac{z}{b} - \frac{z^2}{b \times \sqrt{b^2 + z^2}} \right)$$

Although it depends on the shape of the steel component and the load applied thereon, the shear stress has a maximum value at a depth of 400 μm in many cases, which may serve as an initiation point of fracture. Therefore, the hardness distribution is set as described above.

Although the nitride compound layer is formed after the subjection of the steel to nitrocarburizing treatment, N diffuses inward from the compound layer due to the nitrocarburizing treatment. As a result, this N diffusion layer becomes a hardened layer. By adjusting the N concentration by diffusion, the hardness of the hardened layer can be adjusted as described above.

The steel component of the present disclosure is particularly preferably applied to a toothed component such as a gear, and it is particularly preferable that the nitride compound layer and the hardened layer be formed in a tooth portion of the toothed component. The tooth portion of a toothed component such as a gear is a portion that has a slipping contact and that requires excellent surface fatigue strength. When the nitride compound layer and the hardened layer are formed in the tooth portion, the durability as a toothed component can be ensured.

Not only for a toothed component but also for steel components with a potion having a slipping contact, the surface fatigue of this portion is important for ensuring the durability of the component. Therefore, by forming the nitride compound layer and the hardened phase in such a portion, the effect of improving the durability can be obtained. For this reason, the steel component of the present disclosure is not limited to a toothed component.

The following describes a method of manufacturing the steel component of the present disclosure.

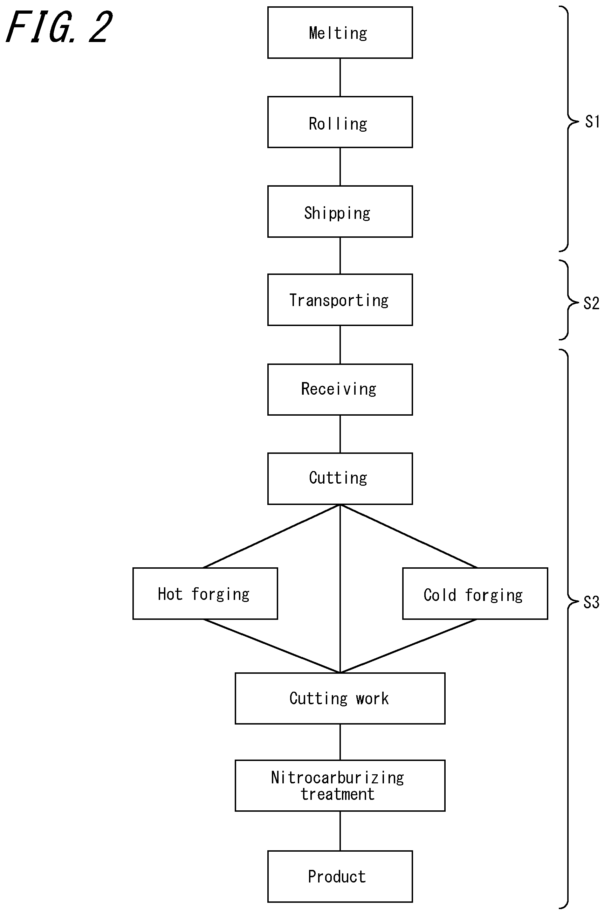

FIG. 2 illustrates typical manufacturing processes for manufacturing a nitrocarburized component using steel for nitrocarburizing (steel bar). In the figure, S 1 is a process of manufacturing a steel bar (steel for nitrocarburizing) which is a raw material, S2 is a process of transporting the steel bar, and S3 is a process of manufacturing a component (nitrocarburized component).

First, in the steel bar manufacturing process (S1), a steel ingot is subjected to hot rolling and/or hot forging to obtain a steel bar, and after quality inspection, the steel bar is shipped. After being transported (S2), the steel bar is cut into predetermined dimensions, subjected to hot forging or cold forging, formed into a desired shape (such as the shape of a gear product or a shaft product) by cutting work such as drill boring or lathe turning as necessary, and then subjected to nitrocarburizing treatment to obtain a product in the nitrocarburized component finish process (S3).

Alternatively, the hot rolled material may be directly subjected to cutting work such as lathe turning or drill boring to obtain a desired shape and then subjected to nitrocarburizing treatment to obtain a product. In the case of hot forging, there are cases where cold straightening is performed after hot forging.

Next, the obtained rolled material or forged material is subjected to cutting work to obtain the shape of the component, and then subjected to nitrocarburizing treatment. To obtain the depth of a hardened layer as described above, it is necessary to set the nitrocarburizing temperature to 550 °C to 590 °C and the nitrocarburizing time to at least 5 hours. On the other hand, when the nitrocarburizing time is such a long time, the compound layer and the porous layer grow excessively depending on the nitrocarburizing conditions, which causes a decrease in fatigue strength. Therefore, it is necessary to keep the nitriding potential low during the nitrocarburizing. As the nitriding potential of the atmosphere during the nitrocarburizing decreases, the thickness of the porous layer decreases. Therefore, it is necessary to obtain the relationship between the nitriding potential and the porous layer thickness in advance for each standard or component of the steel used as the raw material and to adopt a nitriding potential that can achieve the porous layer thickness specified in the present disclosure.

In the nitrocarburizing treatment, N and C are simultaneously immersed into the steel to form a nitride compound layer with solute C dissolved therein, and N is diffused into the steel substrate. Therefore, the nitrocarburizing treatment may be performed in a mixed atmosphere of nitrogenous gas such as $NH_3$ and $N_2$ and carburizing gas such as $CO_2$ and CO, such as an atmosphere of $NH_3$: $N_2$: $CO_2$ = 50: 45: 5.

EXAMPLES

The following describes examples of the present disclosure in detail.

Steels (steel sample IDs A to E) having the compositions listed in Table 1 were made into cast steels, each having a cross section of 300 mm × 400 mm, using a continuous casting machine. Each cast steel was subjected to soaking at 1250 °C for 30 minutes and then hot rolled into a billet having a rectangular cross section with a side of 140 mm. Further, the billet was subjected to hot rolling to obtain an 80 mmφ steel bar (raw material as hot rolled). The steel bar was held at 1200 °C for one hour and then subjected to hot forging to obtain a smaller 35 mmφ steel bar.

Table 1 (mass%)

| Steel | C | Si | Mn | P | S | Cr | Others |
|---|---|---|---|---|---|---|---|
| A | 0.230 | 0.20 | 3.13 | 0.030 | 0.101 | 3.01 | - |
| B | 0.121 | 0.30 | 1.45 | 0.012 | 0.050 | 1.37 | - |
| C | 0.195 | 0.25 | 2.42 | 0.012 | 0.040 | 1.98 | V:0.2 |
| D | 0.061 | 0.02 | 1.79 | 0.015 | 0.042 | 1.19 | Nb:0.12 |
| E | 0.195 | 0.19 | 0.82 | 0.010 | 0.059 | 1.39 | - |
| F | 1.011 | 0.18 | 0.25 | 0.020 | 0.010 | 1.40 | - |
| G | 0.530 | 0.20 | 0.80 | 0.015 | 0.013 | 1.09 | V:0.2 |
| H | 0.060 | 0.53 | 0.80 | 0.031 | 0.015 | 17.20 | - |

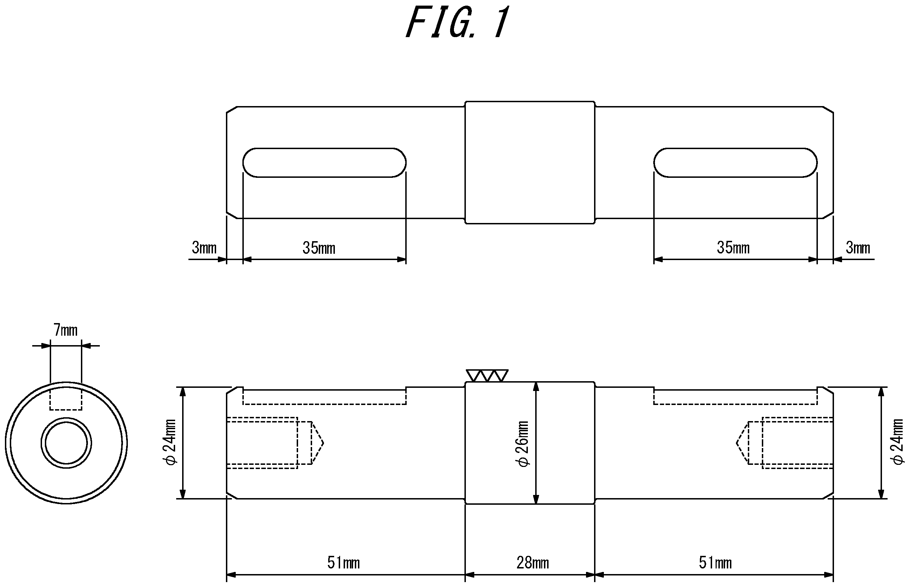

Further, a roller-pitching test piece as illustrated in FIG. 1 was collected from the hot forged material parallel to the longitudinal direction, and the test piece was subjected to nitrocarburizing treatment. To obtain the desired compound layer and hardness distribution, the nitrocarburizing temperature, time, and nitriding potential were adjusted appropriately.

The materials thus obtained by being subjected to nitrocarburizing treatment was further subjected to hardness measurement, compound layer/porous layer thickness measurement, and fatigue resistance evaluation. The results of these measurements and evaluations are listed in Table 2 (Tables 2-1, 2-2, and 2-3).

The hardness was measured at each position of 50 μm, 400 μm, and 600 μm from the surface of a cross section of the nitrocarburized material. The hardness was measured using a Vickers hardness meter at six points with a test load of 2.94 N (300 gf) in accordance with JIS Z2244, and the average value of the results was determined.

The thickness of the compound layer and the porous layer was measured on a cross section of the nitrocarburized material. The steel was corroded with 3 % nital solution, and the surface layer was observed using an optical microscopy for three observation fields at 1000 magnifications to identify the uncorroded compound layer. The thickness of the compound layer was measured as the value of the maximum compound layer thickness in the three observation fields. Regarding the porous layer, the thickness of the thickest location of the aggregate of minute pores existing continuously from the surface in the depth direction was measured in each of the three observation fields, and the maximum value among the results was taken as the thickness of the porous layer.

The fatigue resistance evaluation was performed using a roller pitching test piece (see FIG. 1) that had been subjected to nitrocarburizing treatment but had not been subjected to any of microstructure observation, hardness measurement and precipitate observation, and the fatigue life of the roller pitching test piece was measured by RPT-402 manufactured by Nikko Create. The roller pitching test conditions were a maximum contact stress of 2600 MPa, a slip rate of 40 %, using gear oil (BESCO transaxle) as lubricating oil, and an oil temperature of 80 °C. The rotational speed during the test was 1500 rpm. A quenched and tempered SUJ2 with a crowning R of 150 mm was used as a large roller in contact with the transporting surface.

Table 2-1

| No. | Steel | Compound layer thickness ($\mu$m) | Porous layer thickness ($\mu$m) | Porous layer thickness/ compound layer thickness $\times 100$ | 50 $\mu$m hardness HV | 400 $\mu$m hardness HV | 600 $\mu$m hardness HV | Life at maximum contact stress of 2600 MPa (times) | Classification |
|---|---|---|---|---|---|---|---|---|---|
| 1 | A | 21.1 | 1.8 | 8.5 | 758 | 551 | 312 | $2.3 \times 10^7$ | |
| 2 | A | 10.1 | 2.8 | 27.7 | 760 | 551 | 305 | $4.3 \times 10^7$ | |
| 3 | A | 5.2 | 1.3 | 25.0 | 736 | 555 | 310 | $2.5 \times 10^7$ | |
| 4 | A | 28.2 | 2.7 | 9.6 | 758 | 548 | 313 | $3.1 \times 10^7$ | |
| 5 | B | 5.6 | 2.1 | 37.5 | 758 | 543 | 314 | $3.1 \times 10^7$ | |
| 6 | B | 15.5 | 2.4 | 15.5 | 751 | 545 | 311 | $4.1 \times 10^7$ | |
| 7 | B | 8.2 | 2.7 | 32.9 | 758 | 545 | 318 | $2.2 \times 10^7$ | |
| 8 | B | 29.3 | 2.7 | 9.2 | 754 | 550 | 310 | $2.5 \times 10^7$ | |
| 9 | C | 18.5 | 2.3 | 12.4 | 758 | 550 | 317 | $3.2 \times 10^7$ | |
| 10 | C | 9.8 | 2.9 | 296 | 752 | 547 | 314 | $4.1 \times 10^7$ | |
| 11 | C | 6.3 | 2.1 | 33.3 | 713 | 532 | 333 | $2.7 \times 10^7$ | |
| 12 | C | 26.9 | 2.8 | 10.4 | 763 | 548 | 306 | $2.3 \times 10^7$ | |
| 13 | D | 27.3 | 1.5 | 5.5 | 757 | 550 | 320 | $2.4 \times 10^7$ | |
| 14 | D | 6.3 | 2.1 | 33.3 | 756 | 551 | 309 | $2.2 \times 10^7$ | |
| 15 | D | 12.3 | 2.9 | 23.6 | 755 | 546 | 318 | $2.5 \times 10^7$ | |
| 16 | D | 27.9 | 2.6 | 93 | 763 | 548 | 316 | $2.3 \times 10^7$ | Example |
| 17 | E | 7.1 | 1.3 | 18.3 | 746 | 543 | 310 | $2.1 \times 10^7$ | |
| 18 | E | 12.1 | 2.5 | 20.7 | 756 | 550 | 312 | $2.1 \times 10^7$ | |
| 19 | E | 20.2 | 2.8 | 13.9 | 756 | 549 | 314 | $3.1 \times 10^7$ | |
| 20 | E | 29.9 | 2.9 | 9.7 | 758 | 556 | 314 | $3.0 \times 10^7$ | |
| 21 | F | 13.2 | 1.3 | 9.8 | 615 | 413 | 264 | $2.1 \times 10^7$ | |
| 22 | F | 6.1 | 1.1 | 180 | 666 | 415 | 261 | $2.3 \times 10^7$ | |
| 23 | F | 16.3 | 2.9 | 17.8 | 676 | 446 | 256 | $3.2 \times 10^7$ | |
| 24 | F | 28.2 | 2.9 | 10.3 | 653 | 451 | 259 | $3.2 \times 10^7$ | |
| 25 | G | 5.3 | 1.0 | 18.9 | 643 | 434 | 280 | $2.4 \times 10^7$ | |
| 26 | G | 16.3 | 2.5 | 15.3 | 637 | 427 | 273 | $2.5 \times 10^7$ | |
| 27 | G | 18.2 | 2.2 | 12.1 | 663 | 445 | 272 | $2.1 \times 10^7$ | |
| 28 | G | 28.1 | 2.7 | 9.6 | 643 | 431 | 291 | $3.0 \times 10^7$ | |
| 29 | H | 5.5 | 1.2 | 21.8 | 648 | 419 | 253 | $2.1 \times 10^7$ | |
| 30 | H | 7.5 | 2.1 | 280 | 643 | 479 | 271 | $2.3 \times 10^7$ | |
| 31 | H | 16.2 | 2.8 | 17.3 | 652 | 510 | 261 | $2.7 \times 10^7$ | |
| 32 | H | 29.1 | 2.7 | 93 | 730 | 558 | 251 | $3.0 \times 10^7$ | |

Table 2-2

| No. | Steel | Compound layer thickness ($\mu$m) | Porous layer thickness ($\mu$m) | Porous layer thickness/ compound layer thickness ×100 | 50 $\mu$m hardness HV | 400 $\mu$m hardness HV | 600 $\mu$m hardness HV | Life at maximum contact stress of 2600 MPa (times) | Classification |
|---|---|---|---|---|---|---|---|---|---|
| 33 | A | 3.3 | 1.1 | 33.3 | 751 | 549 | 313 | $1.1 \times 10^7$ | Comparative Example |
| 34 | B | 4.6 | 0.5 | 10.9 | 698 | 453 | 260 | $8.8 \times 10^6$ | |
| 35 | C | 4.3 | 1.5 | 34.9 | 751 | 548 | 313 | $1.3 \times 10^7$ | |
| 36 | D | 4.4 | 1.6 | 36.4 | 630 | 401 | 251 | $6.2 \times 10^6$ | |
| 37 | E | 2.4 | 0.8 | 33.3 | 758 | 546 | 311 | $1.1 \times 10^7$ | |
| 38 | F | 4.1 | 1.3 | 31.7 | 632 | 421 | 275 | $2.1 \times 10^6$ | |
| 39 | G | 3.8 | 1.1 | 28.9 | 663 | 422 | 275 | $8.3 \times 10^6$ | |
| 40 | H | 4.7 | 1.1 | 23.4 | 673 | 434 | 263 | $6.2 \times 10^6$ | |

(continued)

| No. | Steel | Compound layer thickness ($\mu$m) | Porous layer thickness ($\mu$m) | Porous layer thickness/ compound layer thickness $\times 100$ | 50 $\mu$m hardness HV | 400 $\mu$m hardness HV | 600 $\mu$m hardness HV | Life at maximum contact stress of 2600 MPa (times) | Classification |
|---|---|---|---|---|---|---|---|---|---|
| 41 | A | 26.8 | 4.0 | 14.9 | 725 | 506 | 398 | $1.1 \times 10^6$ | |
| 42 | A | 5.2 | 2.3 | 44.2 | 763 | 547 | 313 | $2.5 \times 10^6$ | |
| 43 | A | 9.2 | 3.3 | 35.9 | 755 | 547 | 307 | $2.7 \times 10^6$ | |
| 44 | A | 20.4 | 3.4 | 16.7 | 760 | 547 | 306 | $1.4 \times 10^6$ | |
| 45 | B | 26.9 | 8.2 | 30.5 | 765 | 545 | 311 | $1.5 \times 10^6$ | |
| 46 | B | 5.6 | 2.5 | 44.6 | 755 | 550 | 314 | $1.7 \times 10^6$ | |
| 47 | B | 10.0 | 3.6 | 36.0 | 760 | 555 | 309 | $2.1 \times 10^6$ | |
| 48 | B | 28.8 | 3.2 | 11.1 | 760 | 553 | 316 | $2.6 \times 10^6$ | |
| 49 | C | 20.8 | 6.9 | 33.2 | 760 | 557 | 305 | $2.6 \times 10^6$ | |
| 50 | C | 5.5 | 2.6 | 47.3 | 760 | 549 | 309 | $2.2 \times 10^6$ | |
| 51 | C | 11.1 | 3.3 | 29.7 | 761 | 546 | 313 | $1.4 \times 10^6$ | |
| 52 | C | 28.8 | 3.5 | 12.2 | 758 | 544 | 314 | $1.7 \times 10^6$ | |
| 53 | D | 28.4 | 9.2 | 32.4 | 754 | 556 | 307 | $1.6 \times 10^6$ | |
| 54 | D | 5.1 | 2.4 | 47.1 | 743 | 555 | 310 | $2.4 \times 10^6$ | |
| 55 | D | 10.0 | 3.4 | 34.0 | 766 | 547 | 312 | $1.2 \times 10^6$ | |
| 56 | D | 26.7 | 3.1 | 11.6 | 760 | 552 | 309 | $2.6 \times 10^6$ | Comparative Example |
| 57 | E | 29.3 | 5.5 | 18.8 | 752 | 547 | 310 | $2.3 \times 10^6$ | |
| 58 | E | 5.2 | 2.3 | 44.2 | 744 | 543 | 296 | $2.1 \times 10^6$ | |
| 59 | E | 9.1 | 3.4 | 37.4 | 764 | 550 | 306 | $2.6 \times 10^6$ | |
| 60 | E | 28.2 | 3.5 | 12.4 | 757 | 550 | 313 | $1.4 \times 10^6$ | |
| 61 | F | 5.2 | 2.1 | 40.4 | 634 | 473 | 253 | $1.4 \times 10^6$ | |
| 62 | F | 10.3 | 3.1 | 30.1 | 633 | 492 | 267 | $1.5 \times 10^6$ | |
| 63 | F | 12.4 | 4.2 | 33.9 | 683 | 443 | 251 | $1.7 \times 10^6$ | |
| 64 | F | 23.8 | 4.3 | 18.1 | 688 | 487 | 267 | $2.1 \times 10^6$ | |
| 65 | G | 5.5 | 2.3 | 41.8 | 676 | 421 | 301 | $1.2 \times 10^6$ | |
| 66 | G | 11.3 | 3.3 | 29.2 | 656 | 423 | 275 | $2.6 \times 10^6$ | |
| 67 | G | 12.7 | 3.8 | 29.9 | 653 | 479 | 310 | $2.3 \times 10^6$ | |
| 68 | G | 26.8 | 4.2 | 15.7 | 637 | 453 | 333 | $2.1 \times 10^6$ | |
| 69 | H | 5.5 | 2.4 | 43.6 | 679 | 446 | 255 | $1.5 \times 10^6$ | |
| 70 | H | 10.5 | 3.4 | 32.4 | 664 | 475 | 253 | $1.7 \times 10^6$ | |
| 71 | H | 13.1 | 3.6 | 27.5 | 651 | 452 | 257 | $2.1 \times 10^6$ | |
| 72 | H | 28.1 | 4.5 | 16.0 | 677 | 463 | 275 | $2.6 \times 10^6$ | |

*1 Underline indicates outside the scope of application.

Table 2-3

| No. | Steel | Compound layer thickness (μm) | Porous layer thickness (μm) | Porous layer thickness/ compound layer thickness ×100 | 50 μm hardness HV | 400 μm hardness HV | 600 μm hardness HV | Life at maximum contact stress of 2600 MPa (times) | Classification |
|---|---|---|---|---|---|---|---|---|---|
| 73 | A | 10.2 | 1.3 | 12.7 | 594 | 403 | 267 | $2.0 \times 10^6$ | Comparative Example |
| 74 | B | 8.7 | 1.5 | 17.2 | 569 | 407 | 272 | $2.1 \times 10^6$ | |
| 75 | C | 11.1 | 1.6 | 14.4 | 573 | 401 | 251 | $9.3 \times 10^5$ | |
| 76 | D | 13.1 | 1.6 | 12.2 | 589 | 423 | 263 | $1.5 \times 10^6$ | |
| 77 | E | 5.9 | 1.7 | 28.8 | 591 | 429 | 259 | $2.3 \times 10^6$ | |
| 78 | F | 21.3 | 2.2 | 10.3 | 549 | 443 | 256 | $2.1 \times 10^6$ | |
| 79 | G | 22.3 | 2.3 | 10.3 | 567 | 423 | 257 | $8.3 \times 10^6$ | |
| 80 | H | 27.2 | 2.5 | 9.2 | 593 | 415 | 254 | $6.2 \times 10^6$ | |
| 81 | A | 15.2 | 1.9 | 12.5 | 634 | 385 | 253 | $8.3 \times 10^5$ | Comparative Example |
| 82 | B | 16.8 | 2.3 | 13.7 | 630 | 376 | 261 | $5.9 \times 10^5$ | |
| 83 | C | 18.2 | 2.4 | 13.2 | 666 | 391 | 259 | $7.9 \times 10^5$ | |
| 84 | D | 18.1 | 1.5 | 8.3 | 627 | 365 | 267 | $1.1 \times 10^6$ | |
| 85 | E | 20.5 | 2.3 | 11.2 | 639 | 379 | 264 | $5.1 \times 10^5$ | |
| 86 | F | 5.5 | 1.2 | 21.8 | 666 | 395 | 264 | $3.1 \times 10^6$ | |
| 87 | G | 15.3 | 2.8 | 18.3 | 658 | 391 | 255 | $8.6 \times 10^5$ | |
| 88 | H | 20.3 | 2.2 | 10.8 | 613 | 389 | 253 | $4.2 \times 10^6$ | |
| 89 | A | 17.5 | 2.2 | 12.6 | 608 | 403 | 240 | $5.1 \times 10^6$ | Comparative Example |
| 90 | B | 16.2 | 2.4 | 14.8 | 631 | 404 | 249 | $2.7 \times 10^6$ | |
| 91 | C | 15.5 | 2.6 | 16.8 | 620 | 409 | 225 | $8.1 \times 10^6$ | |
| 92 | D | 14.7 | 2.5 | 17.0 | 613 | 413 | 237 | $4.7 \times 10^6$ | |
| 93 | E | 15.8 | 2.1 | 13.3 | 601 | 415 | 242 | $2.5 \times 10^6$ | |
| 94 | F | 12.3 | 2.0 | 16.3 | 665 | 442 | 230 | $5.1 \times 10^5$ | |
| 95 | G | 13.4 | 2.2 | 16.4 | 671 | 423 | 238 | $4.3 \times 10^6$ | |
| 96 | H | 11.0 | 2.2 | 20.0 | 623 | 411 | 246 | $7.7 \times 10^5$ | |

(continued)

| No. | Steel | Compound layer thickness (μm) | Porous layer thickness (μm) | Porous layer thickness/ compound layer thickness ×100 | 50 μm hardness HV | 400 μm hardness HV | 600 μm hardness HV | Life at maximum contact stress of 2600 MPa (times) | Classification |
|---|---|---|---|---|---|---|---|---|---|
| 97 | A | 10.5 | 5.2 | 49.5 | 723 | 201 | 199 | $8.9×10^5$ | Conventional Example |
| 98 | B | 11.3 | 2.9 | 25.7 | 713 | 175 | 176 | $8.5×10^4$ | |
| 99 | C | 10.7 | 4.3 | 40.2 | 765 | 211 | 220 | $5.1×10^5$ | |
| 100 | D | 9.8 | 2.5 | 25.5 | 722 | 243 | 247 | $1.1×10^6$ | |
| 101 | E | 17.1 | 4.5 | 26.3 | 645 | 194 | 194 | $3.9×10^4$ | |
| 102 | F | 12.3 | 3.4 | 27.6 | 710 | 235 | 185 | $1.2×10^6$ | |
| 103 | G | 11.2 | 2.5 | 22.3 | 723 | 264 | 173 | $1.1×10^6$ | |
| 104 | H | 10.1 | 2.7 | 26.7 | 723 | 222 | 180 | $3.3×10^6$ | |

*1 Underline indicates outside the scope of application.

All Examples had a hardness distribution from the surface in the depth direction where the hardness at depths less than 400 $\mu$m from the surface was greater than the hardness at a depth of 400 $\mu$m from the surface, and the hardness at depths less than 600 $\mu$m was greater than the hardness at a depth of 600 $\mu$m from the surface. Therefore, it can be confirmed that the hardness from the surface to depths of 400 $\mu$m is equal to or greater than the hardness at a depth of 400 $\mu$m from the surface, and the hardness from the surface to depths of 600 $\mu$m is equal to or greater than the hardness at a depth of 600 $\mu$m from the surface.

**Claims**

1.  A steel component, comprising a nitride compound layer with a thickness of 5.0 $\mu$m to 30.0 $\mu$m and a hardened layer in an order from a component surface to a component inside, wherein

    a thickness of a porous layer on an outermost surface of the nitride compound layer is 3.0 $\mu$m or less and 40.0 % or less of a thickness of the nitride compound layer, and
    the hardened layer has a hardness of HV600 or more at a position of 50 $\mu$m inward from the component surface, a hardness of HV400 or more at a position from the component surface to the component inside of 400 $\mu$m, and a hardness of HV250 or more at a position from the component surface to the component inside of 600 $\mu$m.

2.  The steel component according to claim 1, wherein the steel component is a toothed component and has the nitride compound layer and the hardened layer at least in a tooth portion.

FIG. 1

*FIG. 2*

```
          ┌──────────────┐
          │   Melting    │  ┐
          └──────┬───────┘  │
          ┌──────┴───────┐  │
          │   Rolling    │  ├ S1
          └──────┬───────┘  │
          ┌──────┴───────┐  │
          │   Shipping   │  ┘
          └──────┬───────┘
          ┌──────┴───────┐
          │ Transporting │  } S2
          └──────┬───────┘
          ┌──────┴───────┐  ┐
          │  Receiving   │  │
          └──────┬───────┘  │
          ┌──────┴───────┐  │
          │   Cutting    │  │
          └──────┬───────┘  │
        ┌────────┴────────┐ │
  ┌─────┴──────┐   ┌──────┴──────┐
  │Hot forging │   │Cold forging │  ├ S3
  └─────┬──────┘   └──────┬──────┘
        └────────┬────────┘ │
          ┌──────┴───────┐  │
          │ Cutting work │  │
          └──────┬───────┘  │
    ┌────────────┴────────┐ │
    │   Nitrocarburizing  │ │
    │      treatment      │ │
    └────────────┬────────┘ │
          ┌──────┴───────┐  │
          │   Product    │  ┘
          └──────────────┘
```

<table>
<tr><td colspan="2" align="center">**INTERNATIONAL SEARCH REPORT**</td><td>International application No.<br>PCT/JP2021/018687</td></tr>
</table>

**A.   CLASSIFICATION OF SUBJECT MATTER**
C21D 9/32(2006.01)i; C22C 38/00(2006.01)i; C21D 1/06(2006.01)i; C23C 8/26(2006.01)i; C23C 8/32(2006.01)i
FI:     C23C8/32; C21D1/06 A; C23C8/26; C22C38/00 301Z; C21D9/32 A; C22C38/00 301N

According to International Patent Classification (IPC) or to both national classification and IPC

**B.   FIELDS SEARCHED**

Minimum documentation searched (classification system followed by classification symbols)
C23C8/00-C23C8/80

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X | JP 11-100655 A (TOYOTA MOTOR CORP.) 13 April 1999 (1999-04-13) paragraphs [0021]-[0035], fig. 1-4 | 1-2 |
| X | WO 2011/013559 A1 (NIPPON PARKERIZING CO., LTD.) 03 February 2011 (2011-02-03) paragraphs [0027]-[0071], fig. 1-4 | 1-2 |

| ☐  Further documents are listed in the continuation of Box C. | ☒  See patent family annex. |
|---|---|

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>  07 July 2021 (07.07.2021) | Date of mailing of the international search report<br>  20 July 2021 (20.07.2021) |
|---|---|
| Name and mailing address of the ISA/<br>  Japan Patent Office<br>  3-4-3, Kasumigaseki, Chiyoda-ku,<br>  Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2021/018687

| Patent Documents referred in the Report | Publication Date | Patent Family | Publication Date |
|---|---|---|---|
| JP 11-100655 A | 13 Apr. 1999 | (Family: none) | |
| WO 2011/013559 A1 | 03 Feb. 2011 | JP 2011-32536 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0559488 A
- JP 2002069572 A
- JP 2010163671 A
- JP 6388075 B